# EUROPEAN PATENT SPECIFICATION

(11) **EP 3 584 385 B1**
(45) Date of publication and mention of the grant of the patent: **28.02.2024**
(21) Application number: 19180968.0
(22) Date of filing: 18.06.2019
(51) Int. Cl.: E04D 13/03, E06B 3/66, B29C 45/14, B29C 39/10

(54) **IMPROVED METHOD FOR MANUFACTURING A MULTI-WALLED MODULE, ESPECIALLY A MULTI-WALLED ROOF DEVICE**
VERBESSERTES VERFAHREN ZUR HERSTELLUNG EINES MEHRWANDIGEN MODULS, INSBESONDERE EINER MEHRWANDIGEN DACHVORRICHTUNG
PROCÉDÉ AMÉLIORÉ DE FABRICATION D'UN MODULE À PAROIS MULTIPLES, EN PARTICULIER UN DISPOSITIF DE TOIT À PAROIS MULTIPLES

(30) Priority: 19.06.2018 BE 201805416
(43) Date of publication of application: 25.12.2019
(73) Proprietor: Skylux N.V., 8530 Harelbeke (BE)
(72) Inventor: GLORIEUX, Jean, 8530 Harelbeke (BE)
(74) Representative: D'Halleweyn, Nele Veerle Trees Gertrudis

(56) References cited:
- EP-A1- 0 236 211
- FR-A1- 2 578 575
- US-B1- 8 833 010

## Description

### Field of the invention

The present invention relates to a method for manufacturing a multi-walled module, particularly a multi-walled roof device, still more particularly a multi-walled dome device.

### Background

Roof devices in which one or more flat and/or domed plastic or glass elements are combined are known. Multi-walled plastic domes are thus for instance known in which a number of dome-like shells are arranged at a mutual distance. Dome devices in which a flat transparent plastic plate is combined with a dome-like shell are also known. Examples hereof are described in the following patent publications in the name of applicant: Belgian patent application no. 2016/5645, Belgian patent no. 1020769 and Belgian patent no. 1019311. Such roof devices are typically provided with a frame for mounting on an upstand or on another suitable support structure.

Methods are further known for providing a gasket around a panel, for instance a glass panel for vehicles. EP 2 799 201 thus describes a method for manufacturing a panel assembly with a panel and a gasket, wherein the gasket is adhered to a peripheral part of the panel. Such a technique is for instance useful for glass panels which are mounted in sealed manner in vehicles or for solar panels which are arranged in sealed manner in a frame.

Belgian patent application no. 2017/5664 in the name of applicant, already describes an improved method for manufacturing a multi-walled module. The present invention will allow further optimization of this method.

EP 0 236 211 A1 discloses multiple glazing, a method of obtaining the same and a device for using said method. The glazing contains two sheets of glass separated by a space of dehydrated air and maintained by a cross-braced frame, of which at least the surface in contact with the glass is butyl and/or polyisobutylene rubber-based mastic and is covered with a peripheral injection, which adheres in a cohesive maner to the mastic of the cross-braced frame.

### Summary of the invention

Embodiments of the invention have the object of providing a method for manufacturing a multi-walled device with which the wall elements of the multi-walled device can be assembled in improved manner for the purpose of forming an assembled multi-walled whole.

According to the invention, a method according to claim 1 is provided. The method is intended for assembling at least two wall elements which are intended to be placed at least with a peripheral part parallel to each other. Using a first mould, a first curable material is arranged on the peripheral part, on the first surface and/or on the second surface, of the at least two wall elements, such that, after the at least two wall elements have been placed at least with their peripheral parts parallel to each other, a spacer is formed between each pair of adjacent wall elements thereof, which spacer is adhered to a wall element thereof. When two wall elements are assembled, one of the two wall elements can for instance be provided with a spacer. Both elements can optionally be provided with a spacer, wherein the second spacer can then for instance form a spacer between an upstand and the lower wall element. When three wall elements are assembled, two or three of the wall elements can be provided with a spacer in similar manner. After the spacers have been formed on the one or more wall elements, they are arranged with their peripheral parts parallel to each other for the purpose of forming a multi-walled assembly, in a second mould, and such that a space is formed which is bounded by at least the second mould and the one or more spacers. A second curable material is then arranged in said space, such that the second curable material extends along the periphery of the multi-walled assembly, and after curing is adhered to the at least two wall elements.

Using such a method, a sealing frame can be formed in simple manner by arranging respectively a first and second curable material without separate spacers having to be provided. By giving the first and second mould a suitable shape the formed sealing frame can be given any desired shape in accordance with the application for which the multi-walled device is intended. During the process the one or more spacers provide not only for a suitable distance between the first wall element and the second wall element, but also for a stop which ensures that the curable material flowing between the first and the second wall element is stopped.

Advantageous embodiments are described in the dependent claims.

According to an exemplary embodiment, the first and the second curable material are identical. In this way compatibility issues between the materials are avoided and a good adhesion can be obtained between a spacer formed from the first material and a sealing frame formed from the second material. This further also has advantages in respect of recycling of the multi-walled module.

According to an exemplary embodiment, the first and/or the second curable material are arranged in pressureless manner. The first and/or second mould can be provided for this purpose with a flexible part which is configured to extend in a peripheral direction of the peripheral part; wherein the arranging in pressureless manner takes place by moving an injection part along the flexible part in the peripheral direction. According to an alternative, it is however also possible to work with an open first and/or second mould, wherein the injecting takes place in a well controlled manner. The first and/or the second curable material preferably has a dynamic viscosity, measured at a shear rate of 1/s, of below 35000 mPa·s when being arranged. The first and/or the second curable material is preferably a curable polymer composition, for instance a PUR material. The curable material is for instance a polyurethane reaction mixture comprising a polyol and an isocyanate. The curable composition is preferably composed such that it is able to produce an elastomeric copolymer material with a sufficiently high density. Such sealing materials can be arranged in pressureless manner in an open mould in simple manner. In a possible embodiment of the invention the mould is only open at the position of the flexible part, such that the shape of the sealing element is largely determined by the mould, although use can also be made of an open mould without flexible part.

According to an exemplary embodiment, the first mould is configured to form in each case a spacer with a continuous flexible tongue which is bent when each pair of mutually adjacent wall elements is placed at least with their peripheral parts parallel to each other. In this way a good seal can be obtained, also when the wall element on the which spacer acts has unevenness as a result of tolerances. This will be particularly advantageous when the wall element is a thermoformed element, such as a dome element.

According to an exemplary embodiment, the first mould is configured to form a spacer which, as seen in a cross-section in a direction perpendicularly of the peripheral direction of the peripheral part, has a first part which is substantially trapezoidal or rectangular and is adhered with a first side to a wall element, and has a second part which protrudes relative to the first part from a second side opposite the first side of the first part. This second part can then be easily deformed in order to obtain a good seal, also when the wall element on which the spacer acts has unevenness.

According to an exemplary embodiment, each wall element has a polygonal periphery, and arranging the at least two wall elements at least with their peripheral parts parallel to each other results in a polygonal assembly. The first mould can then be provided along a first side of a polygonal wall element, after which an injecting step is performed for the purpose of injecting first curable material, after which the polygonal wall element is rotated and a second side of the polygonal wall element is placed in the first mould, and the injecting step is repeated along the second side, after which these steps are repeated for each subsequent side of the polygonal wall element. The second mould can then be provided along a first side of the polygonal multi-walled assembly, after which an injecting step is performed for the purpose of injecting second curable material, after which the polygonal multi-walled assembly is rotated and a second side of the polygonal assembly is placed in the second mould, and the injecting step is repeated along the second side, after which these steps are repeated for each subsequent side of the polygonal assembly.

In a common embodiment each wall element will have a substantially rectangular periphery. When each wall element has a substantially rectangular periphery, the first, second, third and fourth sides can thus be provided successively with a sealing layer by performing the above described steps for each side. In this way a rectangular multi-walled device is obtained, the wall elements of which are anchored in a substantially rectangular frame manufactured from the second sealing material.

It is however also possible for each wall element to have a round periphery, such that a round multi-walled assembly is formed by the at least two wall elements. The shape of the at least one spacer can also differ from the shape of the wall elements. A round spacer can thus for instance be provided between two hexagonal wall elements.

According to an exemplary embodiment, each wall element has a polygonal periphery, and arranging the at least two wall elements at least with their peripheral parts parallel to each other results in a rectangular assembly. The first mould can then be provided along a first pair of adjacent sides of a polygonal wall element, after which an injecting step is performed for the purpose of injecting first curable material, after which the polygonal wall element is rotated and a second pair of adjacent sides of the polygonal wall element is placed in the first mould, and the injecting step is repeated along the second pair of adjacent sides, after which these steps are optionally repeated for each pair of sides of the polygonal wall element. The second mould can be provided in similar manner along a first pair of adjacent sides of the polygonal multi-walled assembly, after which an injecting step is performed for the purpose of injecting second curable material, after which the polygonal multi-walled assembly is rotated and a second pair of adjacent sides of the polygonal assembly is placed in the second mould, and the injecting step is repeated along the second pair of adjacent sides, after which these steps are optionally repeated for each subsequent side of the polygonal assembly. If the second curable material in the corners between the first pair of adjacent sides and the second pair of adjacent sides does not fit together after these injecting steps, these corners can then be finished corner by corner. Such a method of operation has the advantage that wall elements of different dimensions can be treated in the same machine. It should be noted that it is also possible to arrange the spacer in one operation with a first mould suitable for this purpose, or to work one side at a time for the spacer. It can be interesting particularly for the injecting steps with the second mould to work in pairs of adjacent sides.

In a common embodiment each wall element will have a substantially rectangular periphery. When each wall element has a substantially rectangular periphery, a first pair of adjacent sides and a second pair of adjacent sides can thus be provided successively with a sealing layer, and the two corners therebetween then finished, by performing the above described steps. In this way a rectangular multi-walled device is obtained, the wall elements of which are anchored in a substantially rectangular frame manufactured from the second sealing material.

In another embodiment each wall element has a round periphery, such that a round assembly is formed by the at least two wall elements.

According to an exemplary embodiment, each wall element is one of the following: a glass plate, a glass dome, a plastic plate such as a polycarbonate plate, a plastic dome such as a polycarbonate dome. Some embodiments can comprise only dome elements, while others can comprise only flat elements or a combination of one or more dome elements and one or more flat elements. It is thus possible to provide more than two wall elements in the multi-walled device. It is thus possible to form multi-walled devices with three or more wall elements, wherein a spacer is provided between each pair of adjacent wall elements. One or more additional films can further also be provided between adjacent wall elements.

According to an exemplary embodiment, a gas G is injected between adjacent wall elements of the at least two wall elements. In this way the insulating value of the multi-walled device can be increased. This gas can for instance be injected during forming of the multi-walled assembly prior to injection of the second material; or during injection of the second material, and more specifically just before the whole periphery of the first and second wall element has been provided with sealing material.

According to an exemplary embodiment, one or more inserts are incorporated in the second mould and/or in the first mould, preferably one or more of the following inserts: a sensor such as a rain detector, a ventilation component, a lighting element, a bracket, a hinge, a screw-in insert, one or more cables or wires, a moisture-absorbing material.

According to an advantageous embodiment, the peripheries of the wall elements substantially correspond to each other. The skilled person will appreciate that these peripheries can also differ, but that the peripheries being more or less equal has the advantage that the mould can take on a simple form and that a sealed frame can be obtained around the periphery of the wall elements with a relatively small amount of sealing material.

According to an advantageous embodiment, an outer periphery of the spacer is a maximum of 10% smaller than an outer periphery of the wall elements. This avoids too much sealing material flowing between the wall elements. In a possible embodiment the spacer and the sealing material are arranged such that the sealing material extends to a position against the at least one spacer, and preferably adheres to the at least one spacer. In this way an even stronger multi-walled device is obtained, in which the sealing material is adhered to the at least one spacer. The height of a spacer, measured perpendicularly of the surface of a wall element, preferably lies between 2 mm and 30 mm, more preferably between 5 mm and 15 mm.

According to another variant, a moisture-absorbing material such as a silica gel can be arranged around the spacer, i.e. between the spacer and the sealing frame formed by the second curable material. According to an alternative, the moisture-absorbing material can be arranged on an inner side of the spacer. According to yet another alternative, a first and a second spacer can be provided between two adjacent wall elements, wherein the second spacer lies around the first one at a distance thereof, and a moisture-absorbing material is arranged between the first and the second spacer.

The invention further relates to a multi-walled module, particularly a multi-walled roof device, still more particularly a multi-walled dome device, obtained as according to any one of the above described embodiments of the method.

According to an aspect of the invention, not covered by the appended claims, a multi-walled module, particularly a multi-walled roof device, is provided, comprising: at least two wall elements, each with a first surface and second surface, which are placed at least with a peripheral part parallel to each other; a spacer from a first curable material between each pair of mutually adjacent wall elements, which spacer is adhered to a wall element thereof; a sealing frame of second curable material, which extends along the periphery of the multi-walled module to a position against the spacer.

Advantageous features of the method apply *mutatis mutandis* to the multi-walled module.

### Brief figure description

The above stated and other advantageous features and objects of the invention will become more apparent, and the invention better understood, on the basis of the following detailed description when read in combination with the accompanying drawings, in which:
Figures 1A, 1B and 1C illustrate schematically a part of a first embodiment of a method for manufacturing a dome device according to the invention, wherein figure 1A illustrates a schematic perspective view of the forming of the spacer in a first mould and figure 1C illustrates the result, and wherein figure 1B illustrates a cross-section of the first mould through a plane perpendicularly of the peripheral direction;
Figures 2A-2C illustrate variants of the first mould, as seen in cross-section through a plane perpendicularly of the peripheral direction;
Figure 3 illustrates a schematic cross-section of an embodiment of a multi-walled assembly as can be arranged in a second mould;
Figure 4 illustrates a schematic perspective view of an embodiment for forming in a second mould a sealing frame around a multi-walled assembly;
Figure 5A illustrates a cross-section of a first embodiment of a second mould;
Figure 5B illustrates a cross-section of a second embodiment of a second mould;
Figure 6 illustrates a schematic top view of a second embodiment of the forming of a sealing frame in a second mould;
Figure 7 illustrates a schematic top view of a third embodiment of the forming of a sealing frame in a second mould;
Figures 8-11 illustrate schematic cross-sections of four different embodiments of a multi-walled module; and
Figures 12A and 12B illustrate schematic top views of a fourth embodiment of the forming of a sealing frame in a second mould.

### Detailed embodiments

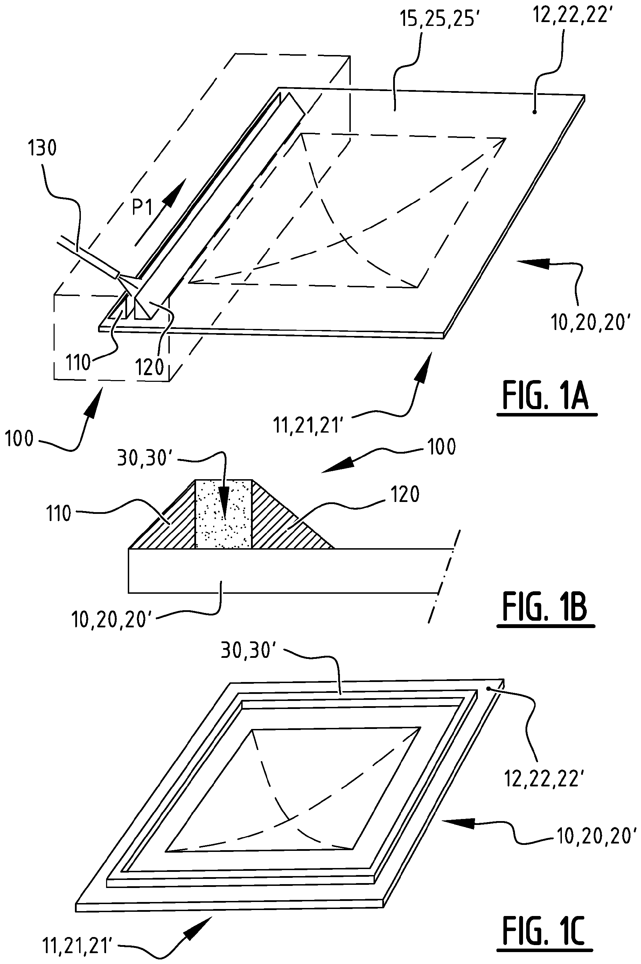

Figures 1A-1C illustrate schematically a first step of an embodiment of a method for manufacturing a multi-walled module, here a multi-walled roof device.

At least two wall elements 10, 20, 20' are provided, which each have a first surface 11, 21, 21' and a second surface 12, 22, 22' and are intended to be placed at least with a peripheral part 15, 25, 25' parallel to each other, see below. When wall elements 10, 20, 20' are plates, they will typically be provided wholly parallel to each other, while in the case of a dome-like wall element at least a peripheral part, such as a frame-like strip or edge, will be parallel to a peripheral part of a dome-like element lying adjacently thereof or to a plate lying adjacently thereof.

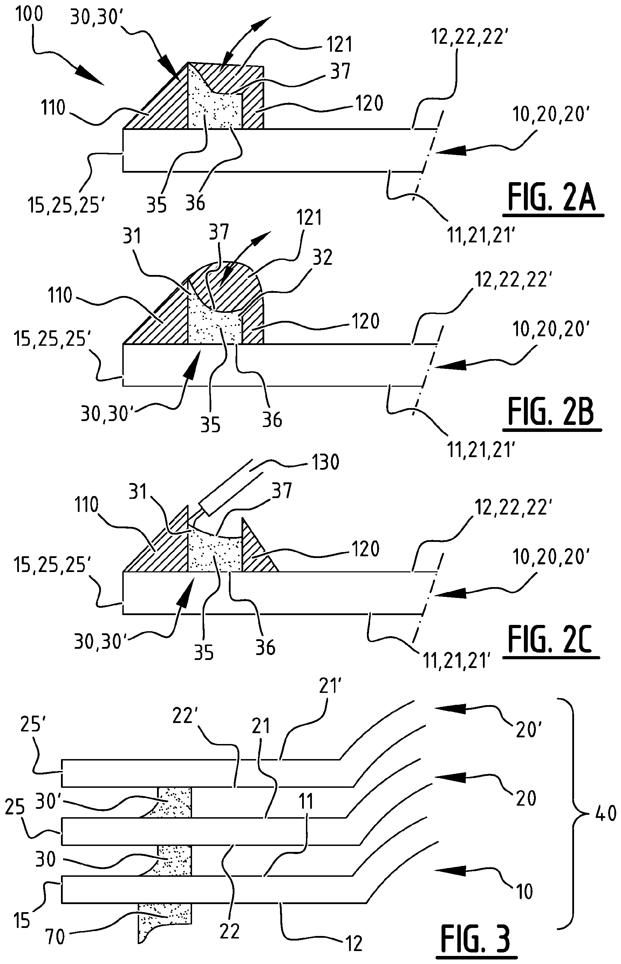

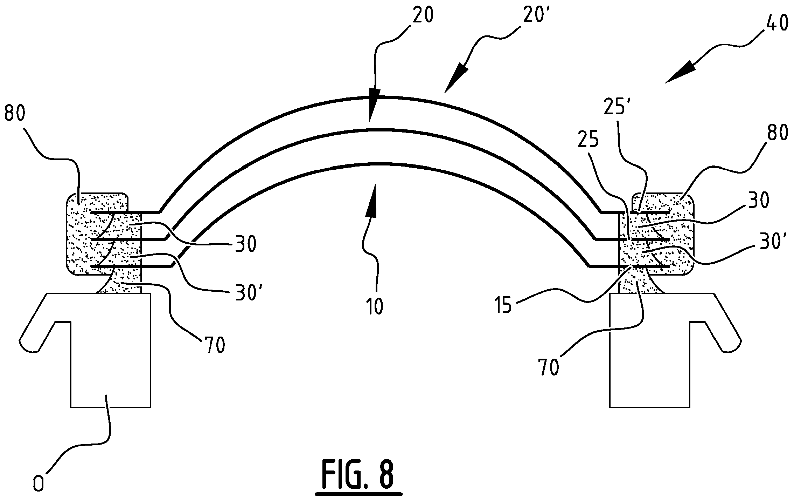

Using a first mould 100, a first curable material is arranged the peripheral part 15, 25, 25', here on the second surface 12, 22, 22', of a wall element 10, 20, 20', such that a spacer 30, 30' is formed which is adhered to wall element 10, 20, 20'. When it is desirable to make a two-walled roof device with two wall elements 10, 20, it is possible to suffice with one spacer 30 which can be arranged on first surface 11 of wall element 10 or on second surface 22 of wall element 20. It can however be advantageous to provide two spacers 30, 70, for instance on second surface 22 of second wall element 20 and on second surface 12 of first wall element 10, see figure 3. Figure 3 illustrates a multi-walled assembly 40 with three wall elements 10, 20, 20', although it will be apparent to the skilled person that wall element 20' with spacer can also be dispensed with for the purpose of forming a multi-walled assembly 40 with two wall elements 10, 20. The spacer 70 on second surface 12 of first wall element 10 can then be used as seal between multi-walled assembly 40 and an upstand O, see also figure 8 and the description of figure 8 hereinbelow. Depending on whether it is necessary to provide a spacer 30, 30', 70, one or more wall elements can thus be arranged in the first mould.

The first curable material is preferably arranged in first mould 100 in substantially pressureless manner by means of an injection part 130. First mould 100 can be open (figures 1B and 2C) or be closed (figures 2A and 2B). When first mould 100 is closed, it can be provided with a flexible part 121 which is configured to extend in a peripheral direction P1 of peripheral part 15, 25, 25'; wherein the arranging in pressureless manner takes place by moving injection part 130 along the flexible part 121 in the peripheral direction P1. The first curable material preferably has a dynamic viscosity which, measured at a shear rate of 1/s, is smaller than 35000 mPa·s when being arranged. The first curable material is preferably a curable polymer composition such as a PUR material.

A first side of a polygonal wall element 10, 20, 20' (in the example of figure 1A rectangular wall element) is preferably arranged in first mould 100, after which an injecting step is performed for the purpose of injecting first curable material, after which the polygonal wall element 10, 20, 20' is rotated and a second side of polygonal wall element 10, 20, 20' is placed in first mould 100, and the injecting step is repeated along the second side, after which these steps are repeated for each subsequent side of the polygonal wall element 10, 20, 20'. According to another variant (not illustrated), it is possible to work in pairs of adjacent sides, wherein in a first step a first pair of adjacent sides is placed in a first mould, after which the polygonal wall element 10, 20, 20' is rotated, typically through 180° in the case of a rectangular assembly, and a subsequent pair of adjacent sides is placed in the first mould. It is however also possible to provide a first mould 100 which extends along the whole periphery of wall element 10, 20, 20'. It is further possible to work with a plurality of injection parts 130 so as to accelerate the process. The advantage of the mould 100 of figure 1A is however that it can be used for wall elements of different dimensions without appreciable modifications being necessary.

According to a possible embodiment shown in figures 2A and 2C, first mould 100 is configured to form in each case a spacer 30, 30' with a continuous flexible tongue 31 which is bent when each pair of mutually adjacent wall elements 10, 20 or 20, 20' is placed at least with their peripheral parts parallel to each other, see figure 3, where the spacers are sketched in the bent position. In this way a good seal can be obtained, also when the wall element on which spacer 30, 30' acts has unevenness as a result of tolerances. This will be particularly advantageous when the wall element is a thermoformed element, such as a dome-like shell. In the variant of figure 2A the tongue 31 is obtained by giving the flexible tongue 121 of mould 100 a suitable shape. In the variant of figure 2C the tongue 31 is obtained by injecting with injection part 130 against a wall of the mould. The skilled person will appreciate that there are other options for ensuring that spacer 30 has a flexible tongue 31. It is further also possible to form a spacer 30 with two flexible tongues 31, 32, see figure 2B. Mould 100 can for this purpose be embodied with a specially formed flexible tongue 121.

In the variants of figures 2A-2C first mould 100 is thus configured to form a spacer 30, 30' which, as seen in a cross-section in a direction perpendicularly of the peripheral direction P1, has a first part 35 which is substantially trapezoidal or rectangular and is adhered 36 with a first side to a wall element 10, 20, 20', and has a second part 31 which protrudes relative to the first part from a second side 37 opposite the first side 36 of first part 35.

In the variants shown in figures 1A-1C and 2A-2C the first material is arranged in pressureless manner. It is however also possible to use a closed mould and to inject the first curable material under pressure, without an injection part moving along a flexible tongue. It is however advantageous for the first and second material to have the same or similar properties and, as will be described below in more detail, the second material is preferably arranged in pressureless manner. Compatibility issues are avoided in this way. The first mould and the second mould can in this way also use the same base mould, in which mould parts need then only be modified as according to whether a spacer 30 or a sealing frame 80 (see below) has to be formed.

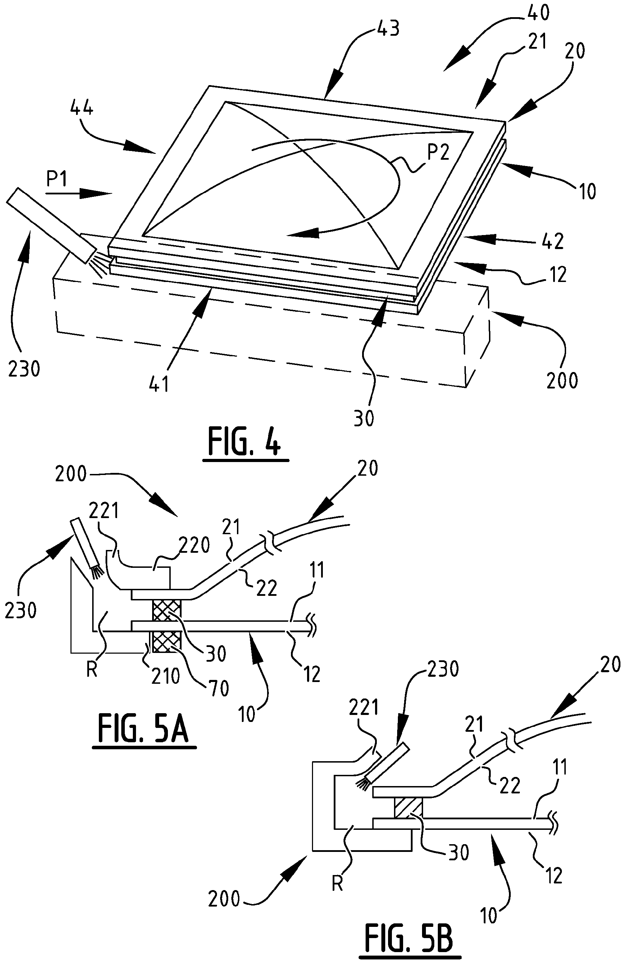

In a second step, which is illustrated in figure 4, wall elements 10, 20 are arranged with their peripheral parts parallel to each other for the purpose of forming a multi-walled assembly, in a second mould 200. Figure 4 shows an example with two wall elements 10, 20, but the skilled person will appreciate that this can also be three or more wall elements. Second mould 200 extends from the first surface 21 of second wall element 20 to the second surface 12 of first wall element 10. Second mould 200 extends here along a first side 41 of the assembly 40 formed by first wall element 10, second wall element 20 and spacer 30. Together with first side 41, second mould 200 bounds a space into which a second curable material is injected by an injection part 230. Second mould 200 is provided for this purpose with a flexible part (not shown in figure 4) extending in a peripheral direction P1 of assembly 40, here in a direction parallel to the first side 41. Via the flexible part the injection part 230 can be introduced into the space R for the purpose of arranging a second curable material in said space in pressureless manner while injection part 230 is being moved relative to first side 41 in the direction P1. The second curable material preferably has a dynamic viscosity, measured at a shear rate of 1/s, of below 35000 mPa·s. The second curable material is preferably a curable polymer composition, for instance a PUR material. The second material extends along the periphery of multi-walled assembly 40, and is adhered to the at least two wall elements 10, 20 after curing.

The first and the second curable material can be substantially identical. In this way the spacer 30 and the sealing frame 80 formed by the second cured material can form one integrated whole, see also figure 8, which extends between wall elements 10, 20, 20' and to the upper peripheral edge (25' in the variant with three wall elements of figure 8) and to the lower peripheral edge 15. The sealing frame preferably extends to a position over first surface 21' of upper wall element 20 and to a position over second surface 12 of lower wall element 10.

In the variant of figure 4 wall elements 10, 20 have a rectangular periphery, and arranging the at least two wall elements 10, 20 at least with their peripheral parts parallel to each other results in a rectangular assembly 40. Second mould 200 is provided along a first side 41 of rectangular assembly 40, after which an injecting step is performed for the purpose of injecting second material, after which the rectangular assembly is rotated and a second side 42 of the polygonal assembly is placed in the second mould, and the injecting step is repeated along the second side 42, after which these steps are repeated for each subsequent side of rectangular assembly 40.

It is however also possible to provide a second mould 200 which extends along the whole periphery of assembly 40. Is further possible to work with a plurality of injection parts 230 in order to accelerate the process. The advantage of the mould 200 of figure 4 is however that it can be used for wall elements of different dimensions without appreciable modifications being necessary.

Figure 5A illustrates a possible embodiment of the second mould 200 of figure 4 in more detail. In the embodiment of figures 5A and 5B second mould 200 comprises a first elongate mould part 210 and a second elongate mould part 220. First mould part 210 and/or second mould part 220 can be provided here with a flexible tongue 221 extending in the peripheral direction of assembly 40. In the illustrated embodiment second mould part 220 is provided with a flexible tongue 221, but the skilled person will appreciate that it is also possible to provide first mould part 210 with a flexible tongue or to provide both mould parts 210, 220 with a flexible tongue. In unloaded state flexible tongue 221 presses against an edge of first mould part 210. This flexible tongue 221 can be lifted for introduction of an injection part 230 for the purpose of arranging the second sealing material in the space R. In the variant of figure 5A lower mould part 210 fits against a second surface 12 of first wall element 10, and second mould part 220 fits against a first surface 21 of second wall element 20.

Figure 5B illustrates another possible embodiment of a second mould 200. In this embodiment second mould 200 is manufactured from one piece which is provided with a flexible tongue 221, which in normal state fits against first surface 21 of second wall element 20 and can be lifted for the purpose of introducing the injection part 230. The skilled person will appreciate that other designs are also possible for second mould 200, wherein second mould 200 can be formed from one, two or more than two parts, and wherein one or more of these parts are configured to allow an injection part 230 to be introduced into the space R bounded by second mould 200 on one side and a peripheral part of the assembly formed by first wall element 10, second wall element 20 and spacer 30 on the other.

In the variants of figures 5A and 5B second mould 200 is provided with a flexible part 221 which extends in a peripheral direction P1 of multi-walled assembly 40; wherein the arranging in pressureless manner is done by moving an injection part 230 along the flexible part in the peripheral direction P1.

According to yet another variant (not shown), it is possible to work with an open second mould 200.

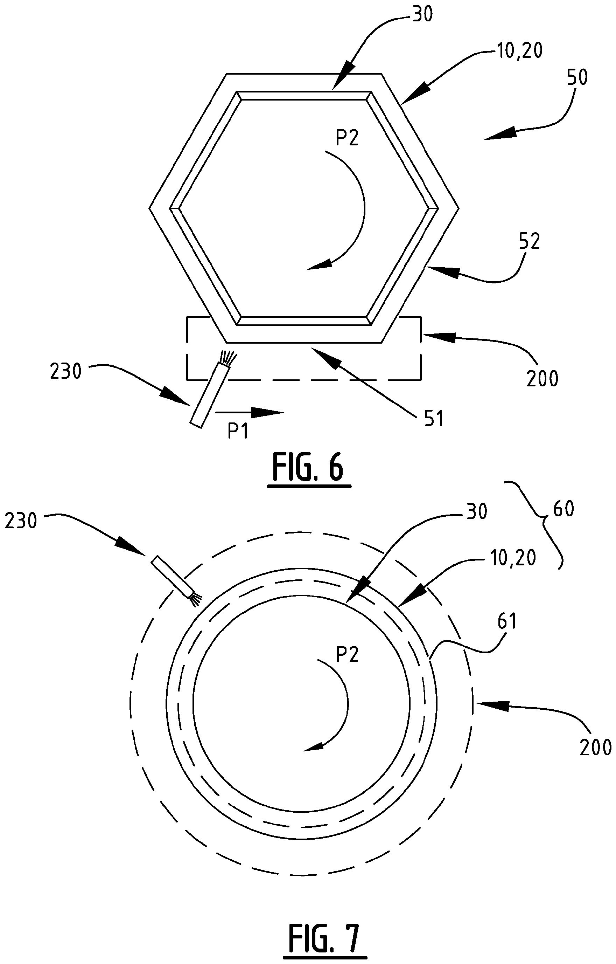

Figure 6 illustrates an embodiment of the method for a first and second wall element 10, 20 with a polygonal periphery, here a hexagonal periphery. Spacer 30 also describes a corresponding polygonal frame, here a hexagonal frame. It is noted that spacer 30 can be formed as one integral frame or can be formed from a plurality of parts, for instance six separate elongate parts which are provided between first wall element 10 and second wall element 20 and form a substantially hexagonal frame. Second mould 200 is here provided along a first side 51 of the assembly 50 formed by first wall element 10, second wall element 20 and spacer 30. In a first step injection material is injected by an injection part 230 into a space bounded by second mould 200 and first side 51 for the purpose of forming a first part of a sealing frame around assembly 50. After this first step, assembly 50 is rotated in the direction of arrow P2 such that the second side 52 of assembly 50 is carried into the mould. Second curable material is then once again injected via injection part 230 such that a second part of the sealing frame is formed along second side 52. These steps are repeated for the third, fourth, fifth and sixth side of assembly 50, such that the injected second curable material forms a sealing frame extending along the whole periphery of assembly 50. Figure 6 illustrates a variant in which the assembly is hexagonal, but the skilled person will appreciate that a similar method can be used for any random polygonal assembly. The skilled person will further appreciate that the first and second wall element 10, 20 need not necessary have the same shape as spacer 30. The first and the second wall element can thus for instance be hexagonal, while a round spacer 30 is provided between the first and the second wall element 10, 20.

Figure 7 illustrates yet another embodiment of a method for manufacturing a multi-walled device, wherein the first and the second wall element have a round periphery, such that a round assembly 60 is formed by the first and the second wall element 10, 20 and the spacer 30 arranged therebetween. Second mould 200 likewise takes a round form here. Second mould 200 can be provided here with an annular flexible tongue (not shown) which allows injection part 230 to be introduced into a space bounded by second mould 200 and the peripheral part 61 of assembly 60. In this embodiment the second mould 200 with the assembly 60 can on the one hand be rotated in the direction of arrow P2 while second curable material is being arranged by injection part 230. According to a variant, injection part 230 can perform a circular movement for the purpose of arranging second curable material in pressureless manner in the space R bounded by second mould 200 and the peripheral part 61 of assembly 60.

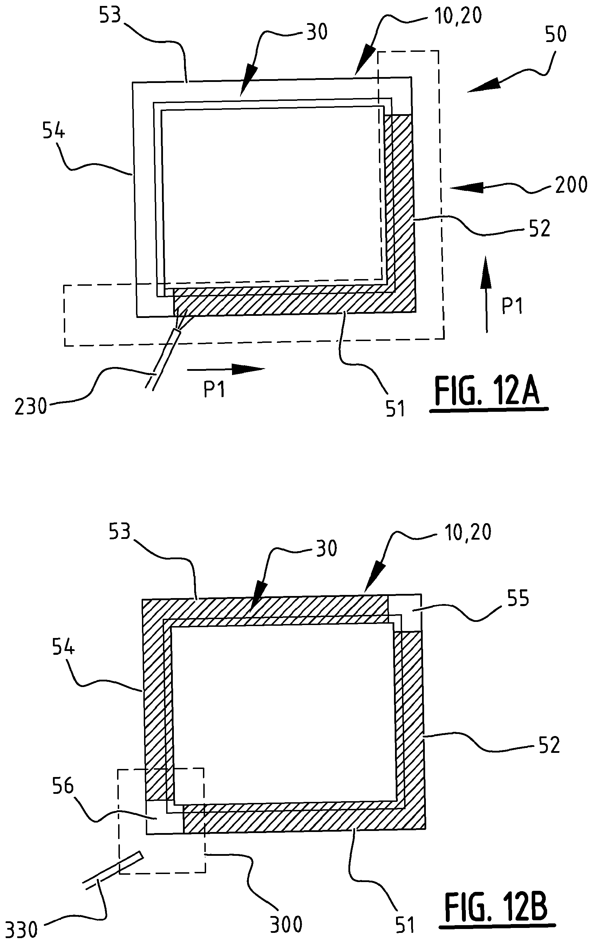

Figures 12A and 12B illustrate yet another embodiment of a method for manufacturing a multi-walled device, wherein the first and the second wall element have a rectangular periphery, such that a rectangular assembly 50 is formed by the first and second wall element 10, 20 and the spacer 30 arranged therebetween. Second mould 200 is provided along a first pair of adjacent sides 51, 52 of rectangular multi-walled assembly 50, after which an injecting step is performed for the purpose of injecting second curable material along these two sides 51, 52, see the hatched part in figure 12A, and arrows P1. The polygonal multi-walled assembly 50 is rotated, and a second pair of adjacent sides 53, 54 of the polygonal assembly is placed in second mould 200. The injecting step is repeated along the second pair of adjacent sides 53, 54 (not shown in figure 12A, although the hatched part in figure 12B shows the second curable material along sides 53, 54). If the second curable material in corners 55, 56 between the first pair of adjacent sides 51, 52 and the second pair of adjacent sides 53, 54 does not fit together after these injecting steps, these corners can then be finished corner by corner. This is illustrated in figure 12B, which shows a third mould 300 and an injection part 330 for finishing the corners. Such a method of operation has the advantage that wall element of different dimensions can be treated with the same second and third mould.

In a common embodiment each wall element will have a substantially rectangular periphery. When each wall element has a substantially rectangular periphery, a first pair of adjacent sides and a second pair of adjacent sides can thus be provided successively with a sealing layer, and the two corners therebetween then finished, by performing the above described steps. In this way a rectangular multi-walled device is obtained, the wall elements of which are anchored in a substantially rectangular frame manufactured from the second sealing material.

Figure 8 illustrates a possible embodiment of a multi-walled device. The multi-walled device of figure 8 comprises a first wall element 10, a second wall element 20 which is arranged above first wall element 10, and a third wall element 20'. Each wall element 10, 20, 20' is provided on a peripheral part 15, 25, 25' thereof with a spacer 70, 30, 30' which can be arranged in the manner which was described with reference to figures 1A-1C. Wall elements 10, 20, 20' can for instance be thermoformed dome elements (as shown), but can also be glass plates or polycarbonate plates. Wall elements 10, 20, 20' and spacers 70, 30, 30' together form an assembly 40 with a peripheral part around which a sealing material 80 is provided. Sealing material 80 adheres to wall elements 10, 20, 20' and the spacers 30, 30' between wall elements 10, 20, 20', and forms a sealing frame around the whole peripheral part of assembly 40. Sealing material 80 extends from a first surface 21' of third wall element 20' to a second surface 12 of lower wall element 10.

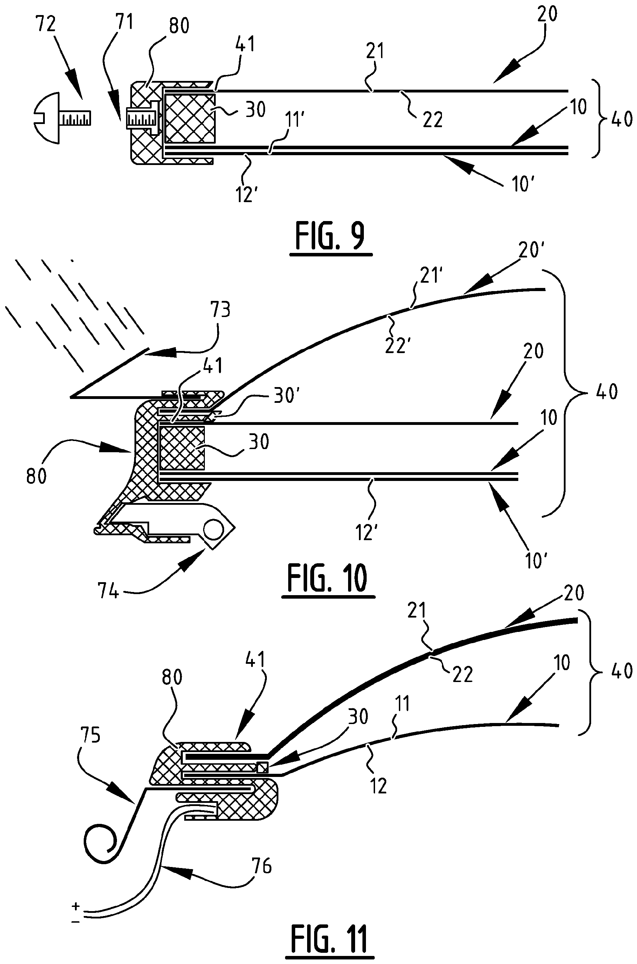

Figure 9 illustrates a possible embodiment of a multi-walled device. The multi-walled device of figure 9 comprises a first wall element 10, an additional first wall element 10' arranged under first wall element 10, a second wall element 20 and a spacer 30. Wall elements 10, 10', 20 can for instance be glass plates or polycarbonate plates. First wall element 10 and additional wall element 10' can for instance be a glass plate. Glass plate 10 is then preferably adhered to glass plate 10'. A film can for instance be provided for this purpose between glass plate 10 and glass plate 10', for instance a polyvinyl butyral (PVB) film. According to an alternative, a light-transmitting plastic layer, for instance a polycarbonate layer, can be provided between glass plate 10 and glass plate 10'. Such an embodiment has the advantage that the impact resistance is improved, that this embodiment is lightweight (the plastic layer contributes to the strength of the whole and is lighter than glass), and enables a better fire classification. The use of a plastic layer ensures that if the glass shatters as a result of fire, the plastic layer nevertheless prevents an opening from being created. According to a variant, one lower glass plate 10 of toughened glass can be provided, and wall element 10' can thus be dispensed with.

Wall elements 10, 10', 20 and spacer 30 together form an assembly 40 with a peripheral part (only one side 41 of which is shown) around which a sealing material 80 is provided. Sealing material 80 adheres to wall elements 10, 10', 20 and spacer 30 and forms a sealing frame around the whole peripheral part (only one side 41 of which is shown) of assembly 40. Sealing material 80 extends from a first surface 21 of second wall element 20 to a second surface 12' of the lower additional wall element 10'. An insert, here a screw-in insert 71, is incorporated in sealing material 80. Sealing material 80 is adhered to wall elements 10, 10', 20 and to spacer 30. The insert can on the one hand be held by adhesion to the sealing material and on the other by giving the insert a suitable form which ensures an anchoring of the insert in sealing material 80. The illustrated embodiment with screw-in insert 71 has the advantage that accessories can be easily attached to the multi-walled device. An awning can thus for instance be attached using a screw 72 which is screwed into screw-in insert 71. Figure 9 shows the multi-walled device in cross-section, and the skilled person will appreciate that a plurality of screw-in inserts 71 can be provided, distributed over the periphery of the multi-walled device. Other inserts such as sensors, ventilation components, lighting elements, brackets, hinges, cables or wires and so on can further also be incorporated in the sealing material.

Figure 10 illustrates a further developed embodiment of a multi-walled device which is similar to that of figure 9, with the difference that an additional upper wall element 20' is provided above the second wall element 20. Provided between the additional upper wall element 20' and second wall element 20 is an additional spacer 30'. The assembly 40 formed by wall elements 10, 10', 20, 20' and spacers 30, 30' has a peripheral part (only one side 41 of which is shown) which is provided with a sealing material 80 extending from a first surface 21' of the additional upper wall element 20' to a second surface 12' of the lower additional wall element 10'. Sealing material 80 is adhered to wall elements 10, 10', 20 and to spacers 30, 30'. Incorporated in the sealing frame formed by sealing material 80 is a rain detector 73 and a bracket 74. Bracket 74 is for instance intended for mounting of a surface-mounting motor for the purpose of opening/closing the multi-walled device. The above discussion of wall elements 10, 10' of figure 9 also applies to wall element 10, 10' in figure 10.

Figure 11 illustrates yet another variant of a multi-walled dome device. The multi-walled dome device of figure 11 comprises a first wall element 10 with a first surface 11 and a second surface 12, a second wall element 20 with a first surface 21 and a second surface 22, and a spacer 30. Spacer 30 is situated between the second surface 22 of second wall element 20 and the first surface 11 of first wall element 10. A peripheral part (only one side 41 of which is shown) of assembly 40 formed by first and second wall elements 10, 20 and spacer 30 is provided with a sealing material 80. The sealing material extends from a first surface 21 of second wall element 20 to a second surface 12 of first wall element 10, and further between the second surface 22 of second wall element 20 and the first side 11 of first wall element 10 to a position against spacer 30. Sealing material 80 extends along the whole periphery of the dome device such that sealing material 80 forms a sealing frame for the assembly 40. One or more inserts can be incorporated in the sealing material 80. In the variant of figure 11 a hinge 75 and a set of electric wires 76 are incorporated in sealing material 80. Electric wires 76 can for instance be used to power lighting elements and/or other electronic components such as sensors. Using hinge 75 the multi-walled dome device can be hingedly mounted.

The skilled person will appreciate that many variants can be envisaged within the scope of the invention, which is defined solely by the following claims.

## Claims

1. Method for manufacturing a multi-walled module, particularly a multi-walled roof device, comprising of:
- providing at least two wall elements (10, 20, 20'), each with a first surface (11, 21, 21') and second surface (12, 22, 22'); which are intended to be placed at least with a peripheral part (15, 25, 25') parallel to each other;
- arranging a first curable material on the peripheral part, on the first surface and/or on the second surface, of the at least two wall elements using a first mould (100), such that, after the at least two wall elements have been placed at least with their peripheral parts parallel to each other, a spacer (30, 30') is formed between each pair of mutually adjacent wall elements thereof, which spacer is adhered to a wall element thereof;
- arranging the at least two wall elements with their peripheral parts parallel to each other for the purpose of forming a multi-walled assembly, in a second mould (200), and such that a space (R) is formed which is bounded by at least the second mould and the one or more spacers;
- arranging a second curable material in said space, such that the second curable material extends along the periphery of the multi-walled assembly, and after curing is adhered to the at least two wall elements.

2. Method according to claim 1, wherein the first and the second curable material are identical.

3. Method according to any one of the foregoing claims, wherein the first curable material is arranged in pressureless manner.

4. Method according to the foregoing claim, wherein the first mould (100) is provided with a flexible part (121) which is configured to extend in a peripheral direction of the peripheral part; wherein the arranging in pressureless manner takes place by moving an injection part (130) along the flexible part in the peripheral direction.

5. Method according to claim 1 or 2, wherein the second curable material is arranged in pressureless manner.

6. Method according to the foregoing claim, wherein the second mould (200) is provided with a flexible part (221) which extends in a peripheral direction of the multi-walled assembly; wherein the arranging in pressureless manner takes place by moving an injection part (230) along the flexible part.

7. Method according to any one of the foregoing claims, wherein the first mould (100) is configured to form in each case a spacer (30, 30') with a continuous flexible tongue (31) which is bent when each pair of mutually adjacent wall elements is placed at least with their peripheral parts parallel to each other.

8. Method according to any one of the foregoing claims, wherein the first mould (100) is configured to form a spacer which, as seen in a cross-section in a direction perpendicularly of the peripheral direction of the peripheral part, has a first part (35) which is substantially trapezoidal or rectangular and is adhered with a first side (36) to a wall element, and has a second part (31) which protrudes relative to the first part from a second side (37) opposite the first side of the first part.

9. Method according to any one of the foregoing claims, wherein the first and/or the second curable material has a dynamic viscosity, measured at a shear rate of 1/s, of below 35000 mPa·s when being arranged.

10. Method according to any one of the foregoing claims, wherein the first and/or the second curable material is a curable polymer composition, for instance a PUR material.

11. Method according to any one of the foregoing claims, wherein the second mould comprises a first elongate mould part (210) and a substantially parallel second elongate mould part (220), and at least one of the first and the second mould part is provided with a flexible tongue (221) for the purpose of closing a space between the first mould part and the second mould part.

12. Method according to any one of the foregoing claims, wherein each wall element has a polygonal periphery, and arranging the at least two wall elements at least with their peripheral parts parallel to each other results in a polygonal assembly (50); wherein the first mould is provided along a first side or a first pair of adjacent sides of a polygonal wall element, after which an injecting step is performed for the purpose of injecting first curable material, after which the polygonal wall element is rotated and a second side or a second pair of adjacent sides of the polygonal wall element is placed in the first mould, and the injecting step is repeated along the second side or the second pair of adjacent sides, after which these steps are optionally repeated for each subsequent side or for each subsequent pair of adjacent sides of the polygonal wall element.

13. Method according to claim 12, wherein the second mould is provided along a first side (51) or a first pair of adjacent sides (51, 52) of the polygonal assembly (50), after which an injecting step is performed for the purpose of injecting second curable material, after which the polygonal assembly is rotated and a second side (52) or a second pair of adjacent sides (53, 54) of the polygonal assembly is placed in the second mould, and the injecting step is repeated along the second side (52) or the second pair of adjacent sides, after which these steps are optionally repeated for each subsequent side or for each subsequent pair of adjacent sides of the polygonal assembly (50).

14. Method according to any one of the foregoing claims, wherein each wall element (10, 20, 20') is one of the following: a glass plate, a glass dome, a plastic plate such as a polycarbonate plate, a plastic dome such as a polycarbonate dome.

15. Method according to any one of the foregoing claims, wherein one or more inserts are incorporated in the second mould, preferably one or more of the following inserts: a sensor such as a rain detector (73), a ventilation component, a lighting element, a bracket (74), a hinge (75), a screw-in insert (71), one or more cables or wires (76).

## Patentansprüche

1. Verfahren zur Herstellung eines mehrwandigen Moduls, insbesondere einer mehrwandigen Bedachungsvorrichtung, aufweisend die folgenden Schritte:
- Bereitstellen von zumindest zwei, jeweils eine erste Oberfläche (11, 21, 21') und eine zweite Oberfläche (12, 22, 22') aufweisenden Wandelementen (10, 20, 20'), welche dazu bestimmt sind, zumindest hinsichtlich eines Randbereichs (15, 25, 25') parallel zueinander angeordnet zu werden;
- Aufbringen eines ersten aushärtbaren Materials auf den Randbereich der ersten Oberfläche und/oder der zweiten Oberfläche der zumindest zwei Wandelemente unter Verwendung einer ersten Form (100), so dass, nach dem zumindest hinsichtlich ihrer Randbereiche parallelen Anordnen der zumindest zwei Wandelemente, zwischen jedem Paar gegenseitig benachbarter Wandelemente ein Abstandshalter (30, 30') gebildet wird, wobei der Abstandshalter an einem der Wandelemente angeklebt ist;
- hinsichtlich ihrer Randbereiche paralleles Anordnen der zumindest zwei Wandelemente, um in einer zweiten Form (200) eine mehrwandige Anordnung zu bilden, und zwar derart, dass ein durch zumindest die zweite Form und den einen oder die mehreren Abstandshalter begrenzter Raum (R) gebildet wird;
- Anordnen eines zweiten aushärtbaren Materials in dem Raum derart, dass sich das zweite aushärtbare Material entlang des Umfangs der mehrwandigen Anordnung erstreckt und nach dem Aushärten an den zumindest zwei Wandelementen anhaftet.

2. Verfahren nach Anspruch 1, wobei das erste und das zweite aushärtbare Material identisch sind.

3. Verfahren nach einem der vorherigen Ansprüche, wobei das erste härtbare Material drucklos aufgebracht wird.

4. Verfahren nach dem vorherigen Anspruch, wobei die erste Form (100) einen sich in einer Umfangsrichtung des Randbereichs erstreckenden flexiblen Teil (121) aufweist, wobei das drucklose Aufbringen durch Bewegen einer Einspritzvorrichtung (130) entlang des flexiblen Teils in der Umfangsrichtung erfolgt.

5. Verfahren nach Anspruch 1 oder 2, wobei das zweite aushärtbare Material drucklos aufgebracht wird.

6. Verfahren nach dem vorherigen Anspruch, wobei die zweite Form (200) einen sich in einer Umfangsrichtung der mehrwandigen Anordnung erstreckenden flexiblen Teil (221) aufweist, wobei das drucklose Aufbringen durch Bewegen einer Einspritzvorrichtung (230) entlang des flexiblen Teils erfolgt.

7. Verfahren nach einem der vorherigen Ansprüche, wobei die erste Form (100) ausgebildet ist, um jeweils einen Abstandshalter (30, 30') zu bilden, mit einer durchgehenden flexiblen Zunge (31), welche gebogen wird, wenn jedes Paar gegenseitig benachbarter Wandelemente zumindest hinsichtlich seiner Randbereiche parallel zueinander angeordnet wird.

8. Verfahren nach einem der vorherigen Ansprüche, wobei die erste Form (100) so ausgebildet ist, dass sie einen Abstandshalter bildet, der, im Querschnitt in einer Richtung senkrecht zur Umfangsrichtung des Randbereichs gesehen, einen im Wesentlichen trapezförmigen oder rechteckigen ersten Teil (35) aufweist, welcher mit einer ersten Seite (36) an ein Wandelement geklebt ist, sowie einen zweiten Teil (31), welcher relativ zum ersten Teil von einer der ersten Seite gegenüberliegenden zweiten Seite (37) des ersten Teils hervorsteht.

9. Verfahren nach einem der vorherigen Ansprüche, wobei das erste und/oder das zweite aushärtbare Material beim Aufbringen eine dynamische Viskosität, gemessen bei einer Scherrate von 1/s, von unter 35000 mPa·s aufweist.

10. Verfahren nach einem der vorherigen Ansprüche, wobei das erste und/oder das zweite aushärtbare Material aus einer aushärtbaren Polymerzusammensetzung, beispielsweise einem PUR-Material, besteht.

11. Verfahren nach einem der vorherigen Ansprüche, wobei die zweite Form ein erstes längliches Formteil (210) und ein im Wesentlichen paralleles zweites längliches Formteil (220) umfasst, wobei das erste und/oder das zweite Formteil eine zwischen dem ersten Formteil und dem zweiten Formteil einen Raum bildende flexible Zunge (221) aufweist.

12. Verfahren nach einem der vorherigen Ansprüche, wobei jedes Wandelement eine polygonale Form aufweist und das zumindest hinsichtlich ihrer Randbereiche parallele Anordnen der zumindest zwei Wandelemente eine polygonale Anordnung (50) ergibt; wobei in der ersten Form eine erste Seite oder ein erstes Paar benachbarter Seiten eines polygonalen Wandelements angeordnet wird, und in einem anschließenden Einspritzschritt das Einspritzen eines ersten aushärtbaren Materials erfolgt, worauf das polygonale Wandelement gedreht wird und in der ersten Form eine zweite Seite oder ein zweites Paar benachbarter Seiten des polygonalen Wandelements angeordnet wird, und der Einspritzschritt entlang der zweiten Seite oder des zweiten Paars benachbarter Seiten wiederholt wird, wobei diese Schritte optional für jede nachfolgende Seite oder für jedes nachfolgende Paar benachbarter Seiten des polygonalen Wandelements wiederholt werden.

13. Verfahren nach Anspruch 12, wobei in der zweiten Form eine erste Seite (51) oder ein erstes Paar benachbarter Seiten (51, 52) der polygonalen Anordnung (50) angeordnet wird, und in einem anschließenden Einspritzschritt das Einspritzen eines zweiten aushärtbaren Materials erfolgt, worauf die polygonale Anordnung gedreht wird, und in der zweiten Form eine zweite Seite (52) oder ein zweites Paar benachbarter Seiten (53, 54) der polygonalen Anordnung angeordnet wird, und der Einspritzschritt entlang der zweiten Seite (52) oder des zweiten Paars benachbarter Seiten wiederholt wird, wobei diese Schritte optional für jede nachfolgende Seite oder für jedes nachfolgende Paar benachbarter Seiten der polygonalen Anordnung (50) wiederholt werden.

14. Verfahren nach einem der vorherigen Ansprüche, wobei jedes Wandelement (10, 20, 20') eines der folgenden ist: eine Glasplatte, eine Glaskuppel, eine Kunststoffplatte, beispielsweise in Form einer Polycarbonatplatte, eine Kunststoffkuppel, beispielsweise in Form einer Polycarbonatkuppel.

15. Verfahren nach einem der vorherigen Ansprüche, bei dem in die zweite Form ein oder mehrere Einsätze eingearbeitet sind, vorzugsweise einer oder mehrere der folgenden Einsätze: ein Sensor, wie z. B. ein Regenmelder (73), ein Belüftungselement, ein Beleuchtungselement, ein Bügel (74), ein Scharnier (75), ein Einschraubeinsatz (71), ein oder mehrere Kabel oder Drähte (76).

## Revendications

1. Procédé de fabrication d'un module à paroi multiple, en particulier, un dispositif de toit à paroi multiple, comprenant :
la fourniture d'au moins deux éléments de paroi (10, 20, 20'), chacun présentant une première surface (11, 21, 21') et seconde surface (12, 22, 22') ; qui sont destinés à être placées au moins avec une partie périphérique (15, 25, 25') parallèlement l'un à l'autre ;
l'application d'un premier matériau pouvant durcir sur la partie périphérique, sur la première surface et/ou sur la seconde surface, des au moins deux éléments de paroi en utilisant un premier moule (100), de telle sorte que, après que les au moins deux éléments de paroi ont été placés avec au moins leurs parties périphériques parallèles l'une à l'autre, une entretoise (30, 30') est formée entre chaque paire d'éléments de paroi mutuellement adjacents de celui-ci, laquelle entretoise est collée à un élément de paroi de celui-ci ;
l'agencement des au moins deux éléments de paroi avec leurs parties périphériques parallèles l'une à l'autre dans le but de former un ensemble à paroi multiple, dans un second moule (200), et de telle sorte qu'il se forme un espace (R) qui est entouré au moins par le second moule et les une ou plusieurs entretoises ;
l'application d'un second matériau pouvant durcir dans ledit espace, de telle sorte que le second matériau pouvant durcir s'étend le long de la périphérie de l'ensemble à paroi multiple et, après durcissement, il adhère aux au moins deux éléments de paroi.

2. Procédé selon la revendication 1, dans lequel les premier et second matériaux pouvant durcir sont identiques.

3. Procédé selon l'une quelconque des revendications précédentes, dans lequel le premier matériau pouvant durcir est appliqué de manière non pressée.

4. Procédé selon la revendication précédente, dans lequel le premier moule (100) comporte une partie flexible (121) qui est configurée de manière à s'étendre dans une direction périphérique de la partie périphérique ; dans lequel l'application de manière non pressée est assurée en déplaçant un composant d'injection (130) le long de la partie flexible dans la direction périphérique.

5. Procédé selon la revendication 1 ou 2, dans lequel le second matériau pouvant durcir est appliqué de manière non pressée.

6. Procédé selon la revendication précédente, dans lequel le second moule (200) est équipé d'une partie flexible (221) qui s'étend dans une direction périphérique de l'ensemble à paroi multiple ;
dans lequel l'application de manière non pressée est assurée en déplaçant un composant d'injection (230) le long de la partie flexible.

7. Procédé selon l'une quelconque des revendications précédentes, dans lequel le premier moule (100) est configuré de manière à former dans chaque cas une entretoise (30, 30') avec une languette flexible continue (31) qui est fléchie lorsque chaque paire d'éléments de paroi mutuellement adjacents est placée au moins avec leurs parties périphériques parallèles.

8. Procédé selon l'une quelconque des revendications précédentes, dans lequel le premier moule (100) est configuré de manière à former une entretoise qui, telle que vue en section transversale dans une direction perpendiculaire à la direction périphérique de la partie périphérique, présente une première partie (35) qui est sensiblement trapézoïdale ou rectangulaire et est collée avec une première face (36) à un élément de paroi et présente une seconde partie (31) qui est en saillie par rapport à la première partie à partir d'une seconde face (37) opposée à la première face de la première partie.

9. Procédé selon l'une quelconque des revendications précédentes, dans lequel le premier et/ou second matériau pouvant durcir présente une viscosité dynamique, mesurée à un taux de cisaillement de 1/s, inférieur à 35000 mPa.s lorsqu'il est mis en oeuvre.

10. Procédé selon l'une quelconque des revendications précédentes, dans lequel le premier et/ou le second matériau pouvant durcir est une composition polymère pouvant durcir, par exemple, un matériau du type polyuréthane (PUR).

11. Procédé selon l'une quelconque des revendications précédentes, dans lequel le second moule comporte une première partie de moule allongée (210) et une seconde partie de moule allongée (220) sensiblement parallèle, et au moins l'une de la première et de la seconde partie de moule comporte une languette flexible (221) dans le but d'obturer un espace entre la première partie de moule et la seconde partie de moule.

12. Procédé selon l'une quelconque des revendications précédentes, dans lequel chaque élément de paroi présente une périphérie polygonale, et l'agencement des au moins deux éléments de paroi avec au moins leurs parties périphériques parallèles l'une à l'autre conduit à un ensemble polygonal (50) ; dans lequel le premier moule est agencé le long d'une première face ou d'une première paire de faces adjacentes d'un élément de paroi polygonal, après quoi une étape d'injection est exécutée dans le but d'injecter un premier matériau pouvant durcir, après quoi l'élément de paroi polygonal est retourné et une seconde face ou une seconde paire de faces adjacentes de l'élément de paroi polygonal est placée dans le premier moule, et l'étape d'injection est répétée le long de la seconde face ou de la seconde paire de faces adjacentes, après quoi ces étapes sont, en variante, répétées pour chaque face suivante ou pour chaque paire de faces adjacentes suivantes de l'élément de paroi polygonal.

13. Procédé selon la revendication 12, dans lequel le second moule est agencé le long d'une première face (51) ou d'une première paire de faces adjacentes (51, 52) de l'ensemble polygonal (50), après quoi, une étape d'injection est exécutée dans le but d'injecter un second matériau pouvant durcir, après quoi, l'ensemble polygonale est tourné et une seconde face (52) ou une seconde paire de faces adjacentes (53, 54) de l'ensemble polygonal est placée dans le second moule et l'étape d'injection est répétée le long de la seconde face (52) ou de la seconde paire de faces adjacentes, après quoi, ces étapes sont, en variante, répétées pour chaque face suivante ou pour chaque paire de faces adjacentes suivante de l'ensemble polygonal (50).

14. Procédé selon l'une quelconque des revendications précédentes, dans lequel chaque élément de paroi (10, 20, 20') est l'un des suivants : une vitre, un dôme de verre, une plaque de matière plastique telle qu'un plaque de polycarbonate, un dôme en matière plastique tel qu'un dôme de polycarbonate.

15. Procédé selon l'une quelconque des revendications précédentes, dans lequel un ou plusieurs inserts sont incorporés dans le second moule, de préférence, un ou plusieurs des inserts suivants : un capteur tel qu'un détecteur de pluie (73), un composant de ventilation, un élément d'éclairage, un support (74), une charnière (75), un insert pour vis (71), un ou plusieurs câbles ou fils (76).
